# EUROPEAN PATENT SPECIFICATION

(11) **EP 3 537 021 B1**
(45) Date of publication and mention of the grant of the patent: **05.01.2022**
(21) Application number: 19382018.0
(22) Date of filing: 11.01.2019
(51) Int. Cl.: F16L 25/00

(54) **DEVICE FOR THE WATER-TIGHT CONNECTION OF PIPES AND ACCESSORIES FOR SAID PIPES**
VORRICHTUNG ZUR WASSERDICHTEN VERBINDUNG VON ROHREN UND ZUBEHÖRTEILE FÜR DIESE ROHRE
DISPOSITIF DE CONNEXION ÉTANCHE DE TUYAUX ET D'ACCESSOIRES POUR LESDITS TUYAUX

(30) Priority: 06.03.2018 ES 201830293 U
(43) Date of publication of application: 11.09.2019
(73) Proprietor: Baccarin, Moreno, 43007 Tarragona (ES)
(72) Inventor: Baccarin, Moreno, 43007 Tarragona (ES)
(74) Representative: Álvarez López, Sonia

(56) References cited:
- DE-A1- 2 321 315
- US-A- 4 124 236
- US-A- 4 176 865
- US-A- 5 458 380

## Description

### OBJECT OF THE INVENTION

The present invention relates to a device for the water-tight connection of pipes and accessories for said pipes, which can be used to make mechanical connections between any type of pipes (smooth, corrugated, etc.) between one another or with accessories such as elbows or reducers, even for the connecting together of said accessories.

### BACKGROUND OF THE INVENTION

At present, the piping of pressurized fluids is performed by means of pipes especially designed for pressurized fluids, using joining accessories between pipes by means of long thermofusion processes of the ends (butt or by means of electrofusion sleeve) between one another or with the accessories common in tubular pipes, such as elbows, reducers, flange adapters, etc.

The use of pipes and specific accessories makes these products more expensive, disregarding the use of other more economical pipes and accessories by type and/or manufacturing volume, such as HDPE, PP or corrugated PVC pipes for plumbing, drainage and underground electrical ducts, for example.

Document US5458380A discloses a pipe joint having a main body comprising through holes for securing hook portions of respective flange bodies.

Document US4176865A discloses a coupling means including a first band encircling the adjacent ends of the pipe sections with their free ends overlapping. A second band overlies and encircles the first band and means are provided for tensioning the ends of the second band together.

Document DE2321315 discloses a device for the axial connection of two pipe ends using an elastic rubber ring installed between a conventional clamp and the pipe ends.

Document US 4124236A discloses a device for the axial connection of two pipe ends comprising a pair of strips having corrugations mating corrugations on pipes, the strips being placed around a pipe and pressed by a tightening band. These drawbacks are resolved with the use of the device of the invention.

### DESCRIPTION OF THE INVENTION

The device of the invention serves to achieve a watertight connection of pipes and accessories for said pipes -irrespective of the type of pipes- and can be used in HDPE pipes and similar not initially anticipated for the piping of fluids under pressure, simply by performing a machining thereon.

According to the invention, the device is made according to claim 1.

In this way, the clamp completely spans the contour of the overlaps and said overlaps can be tightened on the pressure seal, which achieves the water-tightness of the joints, and it can be used to connect, with water-tightness, drainage pipes or electrical conduits which, being more economical than other types of pipes and accessories specific for the piping of pressurized fluids, sufficiently withstand the pressures of the fluids that are going to circulate through the pipes or accessories to join.

The outer profiles can come implemented from the factory, nevertheless, the invention allows them to be executed by means of machining in already existing pipes, e.g. smooth pipes, by means of thermoforming or rectification.

### BRIEF DESCRIPTION OF THE DRAWINGS

- Figure 1: shows a view of an accessory consisting of a tee coupling, joined by its opposing branches to different pipes and by its central branch to another accessory consisting of a flange adapter, where all the joints are materialized by means of the device of the invention.
- Figure 2: shows a view of a detail of the device of the invention where one of the half-clamps has been removed from the clamp for better observation, and where the device is connected to an accessory consisting of a cap to a pipe which is silhouetted on the half-clamp.
- Figures 3a and 3b: show a detailed sectional view of the flange of the device of the invention in two variants of embodiment of said flange.

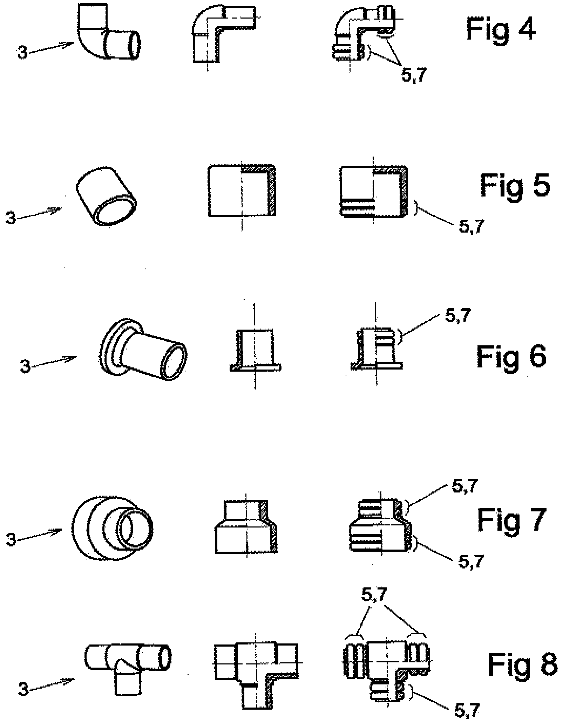

- Figures 4 to 8: each show three views of an accessory whereto a rectification has been made to adapt it to the device of the invention, with the first view showing a perspective view of the accessory, the second view a three-quarter section of the accessory before rectifying, and the third view the same three-quarter section after the rectification has been made; and fig 4 corresponding to an accessory consisting of an elbow at a right angle, fig 5 to an accessory consisting of a cap, fig 6 to an accessory consisting of a flange adapter, fig 7 to an accessory consisting of a reducer and fig 8 to an accessory consisting of a tee coupling.

### DESCRIPTION OF A PRACTICAL EMBODIMENT OF THE INVENTION

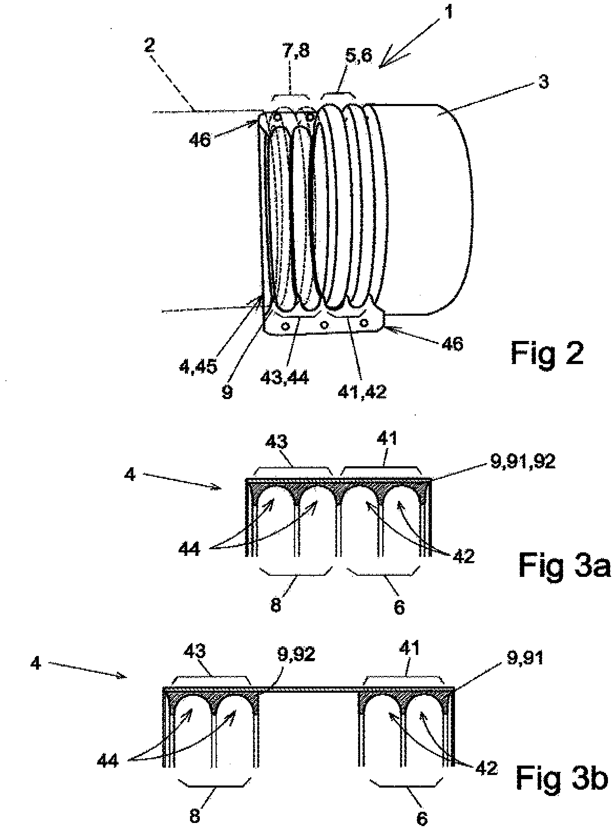

The device (1) for watertight connection of pipes (2) and accessories (3) for said pipes (2) of the invention comprises a tubular clamp (4) with overlaps (6, 8) (see figs 2 and 3a and b) with the pipes (2) or accessories (3) to connect, said clamp (4) comprising:
- a first portion (41) equipped with a first corrugated inner profile (42) complementary to a first end outer profile (5) made on a first pipe (2) or first accessory (3) (on a first accessory (3) in fig 2) to connect thereon by means of a first outer overlap (6),
- a second portion (43) equipped with a second corrugated inner profile (44) complementary to a second end outer profile (7) disposed on a second pipe (2) or second accessory (3) (on a second pipe in fig 2) to connect thereon by means of a second outer overlap (8),
- pressure seals (9) disposed on the first overlap (6) and on the second overlap (8), and
- said clamp (4) being divided into half-clamps (45) that together span the contour of the pipes (2) or accessories (3) to connect, said half-clamps (45) comprising perimetric mutual tightening means.

The pressure seals (9) are integrated in a first covering (91) which spans, at least, the first overlap (6) and in a second covering (92) which spans, at least, the second overlap (8); the coverings (91, 92) being made in compressing material (i.e. elastic and water-tight) and with the respective inner profiles (42, 44) being incorporated in said coverings as seen in the variants of figs 3a and 3b. This achieves that the compressing material has the dual functionality of water-tightness and connection, simplifying the configuration of the device and making the cost cheaper.

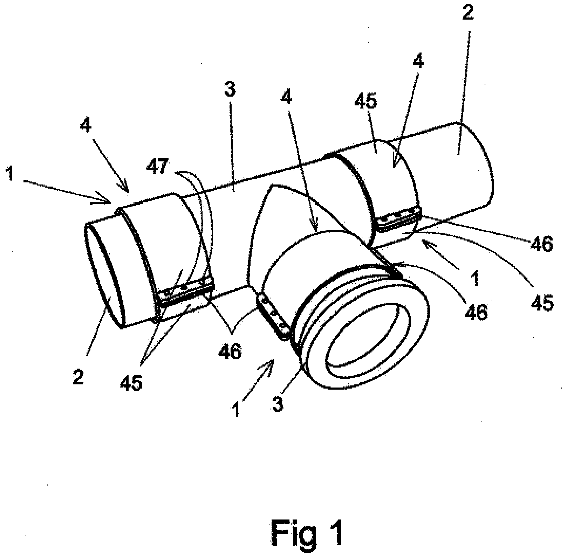

As shown in fig 1, the clamp (4) comprises two half-clamps (45), which simplifies the assembly in comparison with the division into a greater number of half-clamps, a variant which, although not represented, remains within the scope of the invention.

The perimetric mutual tightening means of the half-clamps (45) ideally comprise end flanges (46) and clamping screws (47) between said flanges (46), since they configure a solid and simpler joint.

Very preferably, the second inner profile (44) is the same as the first inner profile (42) (which implies that the outer profiles (5, 7) of the pipes (2) and/or accessories are also identical (3)) making the moulds and designs to work with cheaper due to working with a single profile configuration.

In a first variant of the invention shown in fig 3a, the second covering (92) is continuous with the covering (91) forming a single piece, which enables the continuous manufacturing of the clamp and its bespoke cutting at the time of use.

In a second variant shown in fig 3b, the second covering (92) and the first covering (91) only span the corresponding overlap (6, 8), which entails a saving in material in the intermediate area where there is no overlap with none of the pipes or accessories to connect.

Finally, it should be indicated that the accessory (3) may be, for example, an elbow, a cap, a flange adapter, a reducer and/or a section with one or more branches, as shown in figs 4 to 8.

Having sufficiently described the nature of the present invention, as well as the manner of putting it into practice, it is stated that the aforementioned disposals indicated and represented in the attached drawings can undergo modification of details provided that its main principle is not altered, the invention being defined by the following claims.

## Claims

1. Device (1) for the water-tight connection of pipes (2) and accessories (3) for said pipes; comprising a tubular clamp (4) with overlaps (6, 8) with the pipes (2) or accessories (3) to connect, said clamp (4) comprising:
- a first portion (41) equipped with a first corrugated inner profile (42) complementary to a first end outer profile (5) made on a first pipe (2) - or first accessory (3) to connect thereon by means of a first outer overlap (6),
- a second portion (43) equipped with a second corrugated inner profile (44) complementary to a second end outer profile (7) disposed on a second pipe (2) or second accessory (3) to connect thereon by means of a second outer overlap (8), **characterized in that** said clamp (4) also comprises
- pressure seals (9) disposed on the first overlap (6) and on the second overlap (8), wherein the pressure seals (9) are integrated in a first coating (91) which spans, at least, the first overlap (6) and in a second coating (92) which spans, at least, the second overlap (8); the coatings (91, 92) being made in compressing material and with the respective inner profiles (42, 44) being incorporated in said coatings, and
- said clamp (4) being divided into half-clamps (45) that together span the contour of the pipes (2) or accessories (3) to connect, said half-clamps (45) comprising perimetric mutual tightening means.

2. Device (1) for the water-tight connection of pipes (2) and accessories (3) for said pipes according to claim 1, wherein the perimetric mutual tightening means of the half-clamps (45) comprise end flanges (46) and clamping screws (47) between said flanges (46).

3. Device (1) for the water-tight connection of pipes (2) and accessories (3) for said pipes according to any of the preceding claims, wherein the second inner profile (44) is the same as the first inner profile (42).

4. Device (1) for the water-tight connection of pipes (2) and accessories (3) for said pipes according to any of the preceding claims, wherein the second coating (92) is continuous with the first coating (91) forming a single piece.

5. Device (1) for the water-tight connection of pipes (2) and accessories (3) for said pipes according to any of claims 1 to 3, wherein the second coating (92) and the first coating (91) only span the corresponding overlap (6, 8).

## Patentansprüche

1. Vorrichtung (1) zur wasserdichten Verbindung von Rohren (2) und Zubehörteile (3) für diese Rohre;
umfassend eine rohrförmige Klemme (4) mit Überlappungen (6, 8) mit den Rohren (2) oder Zubehörteilen (3) zur Verbindung, wobei die Klemme (4) Folgendes umfasst:
- einen ersten Abschnitt (41), der mit einem ersten gewellten Innenprofil (42) ausgestattet ist, das komplementär zu einem ersten äußeren Endprofil (5) ist, das an einem ersten Rohr (2) - oder ersten Zubehörteil (3)
- hergestellt ist, um daran mittels einer ersten äußeren Überlappung (6) zu verbinden,
- einen zweiten Abschnitt (43), der mit einem zweiten gewellten Innenprofil (44) ausgestattet ist, das komplementär zu einem zweiten äußeren Endprofil (7) ist, das an einem zweiten Rohr (2) oder einem zweiten Zubehörteil (3) angeordnet ist, um sich daran mittels einer zweiten äußeren Überlappung (8) zu verbinden, **dadurch gekennzeichnet, dass** die Klemme (4) auch umfasst: - Druckdichtungen (9), die an der ersten Überlappung (6) und an der zweiten Überlappung (8) angeordnet sind, wobei die Druckdichtungen (9) in eine erste Beschichtung (91) integriert sind, die zumindest die erste Überlappung (6) überspannt, und in eine zweite Beschichtung (92), die zumindest die zweite Überlappung (8) überspannt; wobei die Beschichtungen (91, 92) aus komprimierendem Material hergestellt sind und wobei die jeweiligen Innenprofile (42, 44) in die Beschichtungen eingearbeitet sind, und
- wobei die Klemme (4) in Halbklemmen (45) unterteilt ist, die zusammen die Kontur der zu verbindenden Rohre (2) oder Zubehörteile (3) überspannen, wobei die Halbklemmen (45) umfangsmäßige gegenseitige Spannmittel umfassen.

2. Vorrichtung (1) zur wasserdichten Verbindung von Rohren (2) und Zubehörteile (3) für diese Rohre nach Anspruch 1, wobei die umfangsmäßigen gegenseitigen Spannmittel der Halbklemmen (45) Endflansche (46) und Klemmschrauben (47) zwischen den Flanschen (46) umfassen.

3. Vorrichtung (1) zur wasserdichten Verbindung von Rohren (2) und Zubehörteile (3) für diese Rohre nach einem der vorhergehenden Ansprüche, wobei das zweite Innenprofil (44) das gleiche ist wie das erste Innenprofil (42).

4. Vorrichtung (1) zur wasserdichten Verbindung von Rohren (2) und Zubehörteile (3) für diese Rohre nach einem der vorhergehenden Ansprüche, wobei die zweite Beschichtung (92) kontinuierlich ist, wobei die erste Beschichtung (91) ein einziges Stück bildet.

5. Vorrichtung (1) zur wasserdichten Verbindung von Rohren (2) und Zubehörteile (3) für diese Rohre nach einem der Ansprüche 1 bis 3, wobei die zweite Beschichtung (92) und die erste Beschichtung (91) nur die entsprechende Überlappung (6, 8) überspannen.

## Revendications

1. Dispositif (1) d'étanchéité des tuyaux (2) et accessoires (3) pour ces tuyaux ;
comprenant une pince tubulaire (4) avec des chevauchements (6, 8) avec les tuyaux (2) ou accessoires (3) à connecter, ladite pince (4) comprenant:
- une première partie (41) équipée d'un premier profil intérieur ondulé (42) complémentaire d'un premier profil extérieur d'extrémité (5) réalisé sur un premier tuyau (2) - ou premier accessoire (3) pour s'y raccorder au moyen d'un premier chevauchement extérieur (6),
- une seconde partie (43) équipée d'un second profil interne ondulé (44) complémentaire d'un second profil externe d'extrémité (7) disposé sur un second tuyau (2) ou un second accessoire (3) pour y être relié au moyen d'un second chevauchement externe (8), **caractérisée en ce que** ladite pince (4) comprend également - des joints de pression (9) disposés sur le premier chevauchement (6) et sur le second chevauchement (8), dans lequel les joints de pression (9) sont intégrés dans un premier revêtement (91) qui couvre, au moins, le premier chevauchement (6) et dans un second revêtement (92) qui couvre, au moins, le second chevauchement (8); les revêtements (91, 92) étant réalisés dans un matériau de compression et les profils internes respectifs (42, 44) étant incorporés dans lesdits revêtements, et
- ledit collier (4) étant divisé en demi-colliers (45) qui, ensemble, enjambent le contour des tuyaux (2) ou accessoires (3) à raccorder, lesdits demi-colliers (45) comprenant des moyens de serrage mutuels périmétriques.

2. Dispositif (1) d'étanchéité des tuyaux (2) et accessoires (3) pour ces tuyaux selon la revendication 1, dans lequel les moyens de serrage mutuel périmétriques des demi-brides (45) comprennent des brides d'extrémité (46) et des vis de serrage (47) entre lesdites brides (46).

3. Dispositif (1) d'étanchéité des tuyaux (2) et accessoires (3) pour ces tuyaux selon l'une quelconque des revendications précédentes, dans lequel le deuxième profil intérieur (44) est le même que le premier profil intérieur (42).

4. Dispositif (1) d'étanchéité des tuyaux (2) et accessoires (3) pour ces tuyaux selon l'une quelconque des revendications précédentes, dans lequel le second revêtement (92) est continu avec le premier revêtement (91) formant une seule pièce.

5. Dispositif (1) d'étanchéité des tuyaux (2) et accessoires (3) pour ces tuyaux selon l'une quelconque des revendications 1 à 3, dans lequel le deuxième revêtement (92) et le premier revêtement (91) ne recouvrent que le chevauchement correspondant (6, 8).
